# EUROPÄISCHE PATENTSCHRIFT

(11) **EP 4 238 853 B1**
(45) Veröffentlichungstag und Bekanntmachung des Hinweises auf die Patenterteilung: **18.02.2026**
(21) Anmeldenummer: 22159584.6
(22) Anmeldetag: 02.03.2022
(51) Int. Cl.: B62D 5/00, B62D 5/04

(54) **STEER-BY-WIRE-LENKSÄULE FÜR EIN KRAFTFAHRZEUG**
STEER-BY-WIRE STEERING COLUMN FOR A MOTOR VEHICLE
COLONNE DE DIRECTION PAR CÂBLE POUR UN VÉHICULE AUTOMOBILE

(43) Veröffentlichungstag der Anmeldung: 06.09.2023
(73) Patentinhaber: thyssenkrupp Presta Aktiengesellschaft, 9492 Eschen (LI); thyssenkrupp AG, 45143 Essen (DE)
(72) Erfinder: Schwarzkopf, Konstantin, 9444 Diepoldsau (CH); Heitz, Dr. Thomas Werner, 9493 Mauren (LI); Toscano, Lorenzo, 9467 Frümsen (CH); Bachmann, Andreas, 88085 Langenargen (DE); Marte, Dominic, 6800 Feldkirch (AT); Melsa, Philip, 6800 Feldkirch (AT); Kammerer, Cristoph, 9000 St.Gallen (CH); Schwarzhans, Paul, 6800 Feldkirch (AT)
(74) Vertreter: thyssenkrupp Intellectual Property GmbH

(56) Entgegenhaltungen:
- DE-A1- 102013 004 055
- DE-A1- 102017 008 651
- DE-A1- 102017 206 276
- DE-A1- 102019 210 096
- US-A1- 2019 092 374

## Beschreibung

### Stand der Technik

Die Erfindung betrifft eine Steer-by-wire-Lenksäule für ein Kraftfahrzeug, die eine relativ zu einem Gehäuse um eine Längsachse drehbar gelagerte Lenkwelle aufweist, die mit einem Getriebe wirkungsmäßig verbunden ist, wobei das Getriebe mindestens zwei im Getriebeeingriff zusammenwirkende Getriebemittel aufweist, wobei ein Umdrehungsbegrenzer zur Begrenzung der Rotation der Lenkwelle relativ zum Gehäuse mit dem Getriebe integriert ausgebildet ist, wobei das Getriebe mit einer Drehmomenterzeugungseinrichtung eines Feedback-Aktuators wirkungsmäßig verbunden ist.

In dem üblicherweise durch eine Trageinheit an der Fahrzeugkarosserie gehaltenen Gehäuse der Lenksäule ist die Lenkwelle drehbar gelagert. Lenkbefehle zur Lenkung des Kraftfahrzeugs können durch manuelle Drehung des am fahrerseitigen, hinteren Ende der Lenkwelle angebrachten Lenkrads eingegeben werden, um einen Lenkeinschlag der lenkbaren Räder des Kraftfahrzeugs zu erzeugen.

Während bei einem konventionellen Lenksystem die Lenkwelle über ein Lenkgetriebe durchgehend mechanisch mit den lenkbaren Rädern verbunden ist, wird in einem Steer-by-wire-Lenksystem die Rotation der Lenkwelle mittels Sensoren erfasst und in ein elektrisches Steuersignal zur Ansteuerung von elektrischen Lenkstellern umgesetzt, die einen Lenkeinschlag der lenkbaren Räder einstellen.

Bei einem Steer-by-Wire-Lenksystem erhält der Fahrer von den gelenkten Rädern keine unmittelbare mechanische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände über das Lenkgetriebe und die mechanisch durchgehende Lenkwelle zum Lenkrad zurückgemeldet werden. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bei einer Steer-by-Wire-Lenksäule bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator weist eine mit der Lenkwelle gekuppelte Drehmomenterzeugungseinrichtung auf, beispielsweise einen Antrieb mit einem elektrischen Motor, dessen Motorwelle über ein Getriebe mit der Lenkwelle gekoppelt ist. Der Motor kann von einer Steuereinheit angesteuert werden, um ein dem realen Reaktionsmoment entsprechendes Rückstellmoment (Feedbackmoment) über die Lenkwelle in das Lenkrad einzukoppeln. Derartige "Force-feedback"-Systeme können dem Fahrer den Eindruck einer realen Fahrsituation wie bei einer konventionellen Lenkung geben, was eine intuitive Reaktion erleichtert.

Bei einer Steer-by-Wire-Lenksäule wird durch die fehlende mechanische Kopplung mit den Rädern die Drehung des Lenkrads nicht durch den Endanschlag der Räder bei Erreichen des maximalen Lenkeinschlags begrenzt. Um dennoch ein zu starkes Einlenken zu vermeiden und auch ein realistisches Lenkgefühl zu simulieren, ist es bekannt, den maximal möglichen Drehwinkel des Lenkrads mittels eines Umdrehungsbegrenzers zu beschränken, der die maximal mögliche Rotation der Lenkwelle beschränkt.

Im Stand der Technik ist aus der DE 603 03 081 T2 ist eine gattungsgemäße Steer-by-wire-Lenksäule bekannt, bei welcher ein Feedback-Aktuator außen an dem Gehäuse der Lenksäule angebracht ist. Der elektrische Motor des Feedback-Aktuators ist über ein Getriebe an die Lenkspindel gekoppelt. Nachteilig dabei ist, dass ein Endanschlag zur Begrenzung der Drehung des Lenkrads dadurch nicht bereitgestellt werden kann.

In der DE 10 2019 210 096 A1 ist eine Lenksäule mit einem mechanischen Umdrehungsbegrenzer zur Begrenzung der Drehung des Lenkrads beschrieben. Diese weist jedoch keinen Feedback-Aktuator und entsprechend kein Getriebe auf. Einen derartigen Umdrehungsbegrenzer in einer gattungsgemäßen Steer-by-wire-Lenksäule unterzubringen, wäre konstruktiv unmöglich oder würde einen hohen baulichen Aufwand und einen relativ großen Bauraum erfordern.

Aus der US 2019/092374 A1 ist eine Steer-by-wire-Lenksäule der eingangs genannten Art bekannt, bei der ein Umdrehungsbegrenzer in ein Getriebe integriert ist. Dieser erfordert jedoch eine aufwendige zusätzliche Zahnradanordnung. Die DE 10 2013 004 055 A1 und die DE 10 2017 008 651 A1 zeigen ebenfalls relativ aufwendig realisierte Umdrehungsbegrenzer.

Angesichts der vorangehend erläuterten Problematik ist es eine Aufgabe der vorliegenden Erfindung, bei einer Steer-by-wire-Lenksäule eine Umdrehungsbegrenzung der Lenkwelle in einer kompakten Bauform mit geringem baulichen Aufwand zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Steer-by-wire-Lenksäule für ein Kraftfahrzeug, die eine relativ zu einem Gehäuse um eine Längsachse drehbar gelagerte Lenkwelle aufweist, die mit einem Getriebe wirkungsmäßig verbunden ist, wobei das Getriebe mindestens zwei im Getriebeeingriff zusammenwirkende Getriebemittel aufweist, wobei ein Umdrehungsbegrenzer zur Begrenzung der Rotation der Lenkwelle relativ zum Gehäuse mit dem Getriebe integriert ausgebildet ist, wobei das Getriebe mit einer Drehmomenterzeugungseinrichtung eines Feedback-Aktuators wirkungsmäßig verbunden ist, ist erfindungsgemäß vorgesehen, dass der Umdrehungsbegrenzer einen Wickelkern aufweist, auf dem ein flexibles Bandelement aufwickelbar ist, wobei der Wickelkern relativ zum Gehäuse oder einem Getriebemittel drehbar ist, und das Bandelement zwischen dem Wickelkern und dem Gehäuse oder Getriebemittel fixiert ist.

Die Lenkwelle der erfindungsgemäßen Steer-by-wire-Lenksäule weist keine mechanische Verbindung zu lenkbaren Rädern eines Kraftfahrzeugs auf. Entsprechend sind auch keine Mittel oder Vorrichtungen vorgesehen, welche eine Drehung der Lenkwelle allein durch eine mechanische Übertragung in einen Lenkeinschlag lenkbarer Rädern umsetzen könnten.

Bei der Erfindung ist ein Umdrehungsbegrenzer bereitgestellt, der den möglichen Drehwinkel der Lenkwelle und damit eines daran angebrachten Lenkrads, auf einen vorgegebenen Maximalwert beschränkt, in einer Lenksäule integriert, die durch das mit der Lenkwelle zusammenwirkende Getriebe zur Anbindung eines Feedback-Aktuators ausgebildet ist. Dabei kann eine vorteilhafte Ausführung vorsehen, dass die erfindungsgemäße Lenksäule einen Feedback-Aktuator aufweist. Dieser kann in vorteilhafter Weise an das besagte Getriebe angeschlossen sein, oder dieses aufweisen. Ein derartiger Feedback-Aktuator kann eine Antriebs- und/oder Bremseinrichtung aufweisen, die bevorzugt baulich mit der Lenksäule vereinigt sein kann, mit anderen Worten lösbar oder fest mit dieser verbunden sein kann. Es ist auch denkbar und möglich, dass das Getriebe der erfindungsgemäßen Lenksäule eine Kupplung oder eine andere mechanische Schnittstelle aufweist, welche es ermöglicht, ein externes Drehmoment oder eine externe Kraft in die Lenkwelle einzukoppeln.

Der Umdrehungsbegrenzer ist in das Getriebe integriert. Dadurch bilden der Umdrehungsbegrenzer und das Getriebe zusammen eine integrierte Baueinheit. Die im Stand der Technik in separaten Baugruppen realisierten Funktionen der Drehmomentübertragung eines Feedback-Moments auf die Lenkwelle und der Drehbegrenzung der Lenkwelle können miteinander vereinigt werden. Ein Vorteil ist, dass der konstruktive und fertigungstechnische Aufwand verringert werden kann. Ein weiterer Vorteil ist, dass ein kompakterer Aufbau mit geringerem Bauraumbedarf und reduziertem Gewicht realisierbar ist.

Es ist zusätzlich vorteilhaft, dass die drehmomentübertragenden Eigenschaften des Getriebes genutzt werden können, um eine spezifische Drehwinkelbegrenzung zu erzeugen. Beispielsweise kann entsprechend einem vorgegebenen Übersetzungs- oder Untersetzungsverhältnis konstruktiv einfach ein möglicher Drehwinkel der Lenkwelle realisiert werden, auch von mehr als 360°. Dadurch ist es ebenfalls möglich, die zur Begrenzung der Drehbewegung im Anschlag auftretenden Kräfte besser zu kontrollieren.

Der Umdrehungsbegrenzer ist wirkungsmäßig mit einem Getriebemittel verbunden. Der Umdrehungsbegrenzer ist dabei ausgebildet, um eine bei der Drehmomentübertragung auftretende Bewegung eines Getriebemittels direkt oder mittelbar einzuschränken. Hierzu kann bevorzugt ein mechanischer Anschlag wirkungsmäßig zwischen einem Getriebemittel und dem relativ dazu feststehenden Gehäuse angeordnet sein. Wenn die Bewegung des mit dem Umdrehungsbegrenzer verbundenen Getriebemittels im Anschlag gestoppt wird, wird damit ebenfalls die Bewegung sämtlicher in Eingriff stehender Getriebemittel gestoppt, insbesondere auch des mit der Lenkwelle verbundenen Getriebemittels. Ein Vorteil dieser Anordnung ist, dass der Umdrehungsbegrenzer flexibel und mit hoher konstruktiver Freiheit innerhalb des Getriebes angeordnet werden kann, so dass eine optimierte Funktion und Bauraumanpassung erfolgen kann.

Das Getriebe ist mit einer Drehmomenterzeugungseinrichtung eines Feedback-Aktuators wirkungsmäßig verbunden. Die erfindungsgemäße Lenksäule kann bevorzugt einen Feedback-Aktuator aufweisen. Dieser weist zumindest eine Drehmomenterzeugungseinrichtung auf. Diese kann bevorzugt eingangsseitig an dem Getriebe angeschlossen sein, an dem die Lenkwelle ausgangsseitig angeschlossen ist. Dadurch kann ein von der Drehmomenterzeugungseinrichtung erzeugtes Drehmoment in die Lenkwelle eingekoppelt werden, bevorzugt als Feedback-Moment zur Simulation einer mechanischen Rückmeldung von lenkbaren Rädern.

Erfindungsgemäß ist vorgesehen, dass der Umdrehungsbegrenzer einen Wickelkern aufweist, auf dem ein flexibles Bandelement aufwickelbar ist, wobei der Wickelkern relativ zum Gehäuse oder einem Getriebemittel drehbar ist, und das Bandelement zwischen dem Wickelkern und dem Gehäuse oder Getriebemittel fixiert ist. Das flexible Bandelement umfasst ein langgestrecktes Band und ist quer zu seiner Längserstreckung flexibel verformbar. Der Wickelkern ist um seine Wickelachse relativ zum Gehäuse oder einem Getriebemittel drehbar. Ein erster Abschnitt, beispielsweise ein erstes Ende oder ein erster Zwischenabschnitt des Bandelements ist an einem Umfang des Wickelkerns fixiert. Ein von dem ersten Abschnitt beabstandeter zweiter Abschnitt des Bandelements ist an einem relativ zur Drehung des Wickelkerns um seine Wickelachse feststehenden Teil des Getriebes fixiert. Dadurch erstreckt sich der Wickeltrum, der durch einen auf dem Wickelkern aufwickelbaren Bandabschnitt des Bandelements gebildet wird, und zwar als Zugtrum zwischen dem Wickelkern und dem relativ dazu feststehenden Teil.

Die Umdrehungsbegrenzung wird dadurch realisiert, dass bei einer Drehung des Wickelkerns das Bandelement auf dem Wickelkern aufgewickelt wird. Durch das Aufwickeln wird der Wickeltrum zwischen dem Wickelkern und dem relativ dazu feststehenden Teil des Getriebes verkürzt. Beim Erreichen des zur Umdrehungsbegrenzung maximal möglichen Drehwinkels ist das Bandelement auf dem Wickelkern so weit aufgewickelt, dass es zwischen den gegeneinander verdrehbaren Umfangsabschnitten von Wickelkern und feststehendem Teil gespannt und auf Zug beansprucht wird. Dadurch wird ein mechanischer Endanschlag realisiert, und die relative Drehung des Wickelkerns gestoppt. Ein Vorteil dieser Ausführung ist, dass eine relative Drehung um mehrere Umdrehungen zuverlässig und mit geringem Aufwand bereitgestellt werden kann. Dabei kann die Anordnung kompakt und praktisch wartungsfrei ausgestaltet werden.

In der vorgenannten Ausführung ist es möglich, dass der Wickelkern koaxial zu einem Getrieberad angeordnet ist. Der Wickelkern kann beispielsweise an einem Getrieberad drehfest fixiert sein. Ein erster Abschnitt des Bandelements ist an einem koaxialen Umfang des Wickelkerns fixiert. Ein zweiter Abschnitt des Bandelements ist an dem relativ dazu feststehenden Gehäuse fixiert, so dass sich der Wickeltrum zwischen dem Wickelkern und Gehäuse erstreckt. Alternativ kann vorgesehen sein, dass der Wickelkern relativ zum Getrieberad rotatorisch, bezüglich Drehung um die Wickelachse, die identisch ist mit der Drehachse des Getrieberads, feststehend ist, und das Bandelement erstreckt sich mit seinem Wickeltrum zwischen Wickelkern und Getrieberad.

Der Wickelkern kann raumsparend an oder in einem Getrieberad angebracht sein, beispielsweise innerhalb eines Innenraums eines hohlen, trommelförmigen Riemen- oder Zahnrads bei dem die Verzahnung koaxial außen relativ zum Innenraum angeordnet ist.

Eine vorteilhafte Ausführung kann vorsehen, dass der Wickelkern fest mit einem Getrieberad verbunden ist, beispielsweise durch eine einstückige Ausbildung. Dadurch wird eine besonders platzsparende Bauweise ermöglicht, und eine rationelle Fertigung, beispielsweise als Kunststoff-Spritzgussteil oder als Metall-Druckgussteil.

Alternativ kann vorgesehen sein, dass der Wickelkern drehfest mit dem Gehäuse verbunden ist, wobei das Bandelement bei einer relativen Drehung des Getrieberads ebenfalls bis zum Endanschlag aufgewickelt wird.

Eine vorteilhafte Ausführung kann vorsehen, dass das Getriebe mindestens zwei miteinander in Eingriff stehende Getrieberäder aufweist. Getrieberäder umfassen rotierende Getriebemittel, wie beispielsweise Riemenräder, Zahnriemenräder, Zahnräder, oder auch Schnecken, Schneckenräder oder dergleichen. Bei einem Riemen- oder Zahnriementrieb stellt der als Zugmittel umlaufende Riemen oder Zahnriemen ebenfalls ein umlaufendes Getriebemittel dar. Dadurch, dass der Umdrehungsbegrenzer direkt oder mittelbar mit jedem der Getrieberäder zur Begrenzung dessen Drehung zusammenwirken kann, wird eine bessere konstruktive Anpassung als im Stand der Technik ermöglicht, bei dem der Umdrehungsbegrenzer an der Lenkwelle angreift.

Es kann vorteilhaft sein, dass ein Getriebemittel drehfest mit der Lenkwelle verbunden ist. Bevorzugt kann beispielsweise ein erstes Getrieberad auf der Lenkwelle angebracht sein, so dass diese dann selbst eine Getriebewelle des Getriebes bildet. Dadurch wird ein kompakter Aufbau ermöglicht.

Die Drehmomenterzeugungseinrichtung kann einen motorischen Antrieb umfassen. Ein derartiger aktiver Antrieb kann beispielsweise einen elektrischen Motor aufweisen, der ein Getriebemittel antreibt, wie etwa ein auf der Motorwelle angebrachtes Getrieberad.

Alternativ oder zusätzlich kann auch eine andere Art von Drehmomenterzeugungseinrichtung vorgesehen sein, wie beispielsweise eine passive Bremseinrichtung, die ohne externe Energiezufuhr ein Bremsmoment durch Reibung erzeugen kann, welches einem in die Lenkwelle eingegebenen manuellen Lenkmoment entgegenwirken kann. Es kann auch ein Energiespeicher vorgesehen sein, beispielsweise ein Federspeicher, der ein als manuell über das Lenkrad eingegebenes Drehmoment speichern kann, und bei Bedarf als Feedback-Moment wieder an die Lenkwelle abgeben kann.

In einer vorteilhaften Weiterbildung ist es möglich, dass der Umdrehungsbegrenzer mit einem Getriebemittel integriert ausgebildet ist. Beispielsweise kann der Umdrehungsbegrenzer direkt oder mittelbar mit einem Getrieberad verbunden sein, oder auch mit einem Zugmittel oder einem anderen drehmomentübertragenden Übertragungsmittel des Getriebes. Durch die integrierte Bauweise erhält ein Getriebemittel eine Doppelfunktion, nämlich zur Drehmomentübertragung und auch zur Umdrehungsbegrenzung. Dadurch wird eine besonders bauraumsparende Integration in die Lenksäule ermöglicht.

Eine vorteilhafte Möglichkeit ist, dass ein Getriebemittel ein Anschlagelement aufweist, und das Gehäuse ein mit dem Anschlagelement zusammenwirkendes Gegenanschlagelement aufweist.

Das Anschlagelement bewegt sich bei der Drehmomentübertragung zusammen mit dem Getriebemittel, beispielsweise entsprechend der Drehung eines Getrieberads. Das Gegenanschlagelement ist relativ dazu feststehend im Bewegungsweg des Anschlagelements angeordnet, so dass es den Bewegungsweg versperrt. Dadurch kann das Anschlagelement in Richtung seiner Bewegung gegen das Gegenanschlagelement mechanisch anschlagen, wodurch beispielsweise die weitere Drehung eines Getrieberads blockiert wird, und somit begrenzt wird. Die Anschlag- und Gegenanschlagelemente können beispielsweise axial oder radial vorstehende Vorsprünge, Nocken oder dergleichen aufweisen, die mit ihren Querschnitten in eine gemeinsame relative Bewegungsbahn ragen, so dass sie über einen mechanischen Anschlag eine formschlüssige Begrenzung erzeugen können.

Es ist auch möglich, dass Anschlag- und Gegenanschlagelemente über einen Spindeltrieb oder ein anders aufgebautes Anschlaggetriebe an ein Getriebemittel angekoppelt sind, so dass sie relativ zueinander bewegt und in Anschlag gebracht werden können.

### Beschreibung der Zeichnungen

Vorteilhafte Ausführungsformen der Erfindung werden im Folgenden anhand der Zeichnungen näher erläutert. Im Einzelnen zeigen:
- Figur 1: ein erfindungsgemäßes Getriebe in einer schematischen perspektivischen Ansicht,
- Figur 2: eine schematisch auseinander gezogene Darstellung des Getriebes gemäß Figur 1,
- Figur 3: eine schematische axiale Ansicht des Getriebes gemäß Figur 2 innerhalb des zulässigen Umdrehungswegs,
- Figur 4: eine schematische axiale Ansicht des Getriebes wie in Figur 3 bei Umdrehungsbegrenzung,
- Figur 5: eine weitere schematisch auseinander gezogene Darstellung des Getriebes gemäß Figur 2,
- Figur 6: eine weitere Darstellung des Getriebes ähnlich Figur 5,
- Figur 7: eine zweite Ausführung eines erfindungsgemäßen Getriebes in einer schematischen axialen Ansicht ähnlich Figur 3,
- Figur 8: eine schematische perspektivische Ansicht des Gehäuses aus Figur 7,
- Figur 9: eine schematische perspektivische Ansicht des Getrieberads aus Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

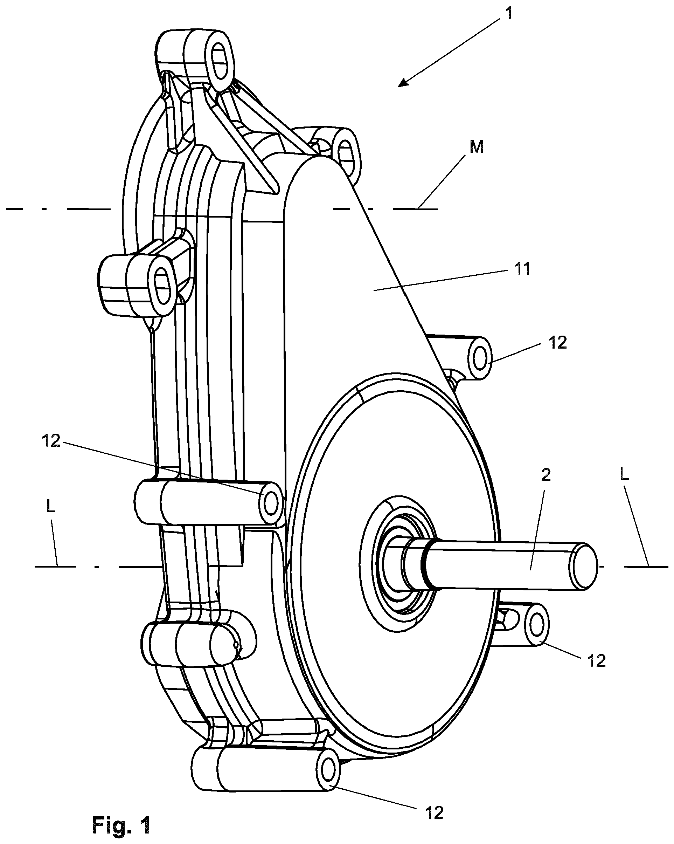

Fig. 1 zeigt ein Getriebe 1 in einer äußeren Ansicht, welches an einer Lenkwelle 2 angebracht ist, die um eine Längsachse L in einem nicht weiter dargestellten Gehäuse einer Steer-by-wire-Lenksäule drehbar gelagert ist.

Parallel zur Längsachse L ist mit Abstand eine Motorachse M angeordnet. Diese bezeichnet die Drehachse einer hier nicht dargestellten Motorwelle eines elektrischen Motors eines hier ebenfalls nicht dargestellten, im Prinzip bekannten motorischen Feedback-Aktuators. Für die Erläuterung der erfindungsgemäßen Funktion ist es ausreichend, dass mittels eines Motors oder einer anderen Drehmomenterzeugungseinrichtung ein Drehmoment um die Motorachse M in das Getriebe 1 eingekoppelt und auf die Lenkwelle 2 übertragen werden kann.

Das Getriebe 1 weist ein Gehäuse 11 auf. Dieses kann ein Gussteil aufweisen, beispielsweise aus Aluminium- oder Magnesiumguss, und Befestigungsmittel 12 zur Anbringung an der Lenksäule aufweisen.

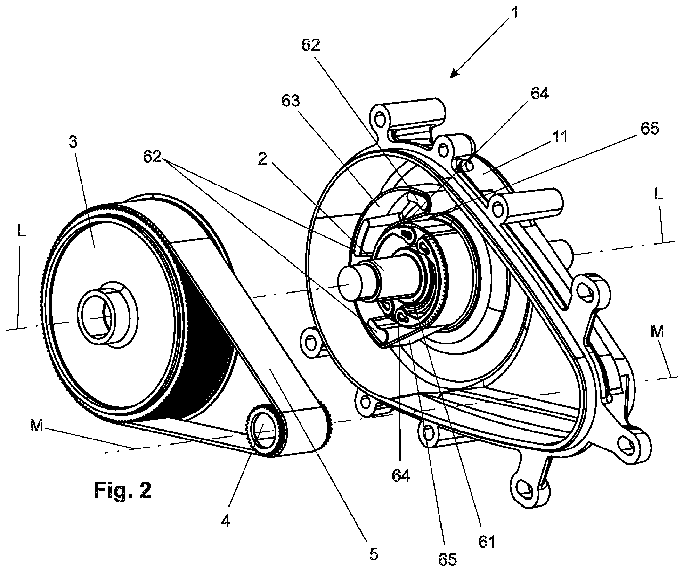

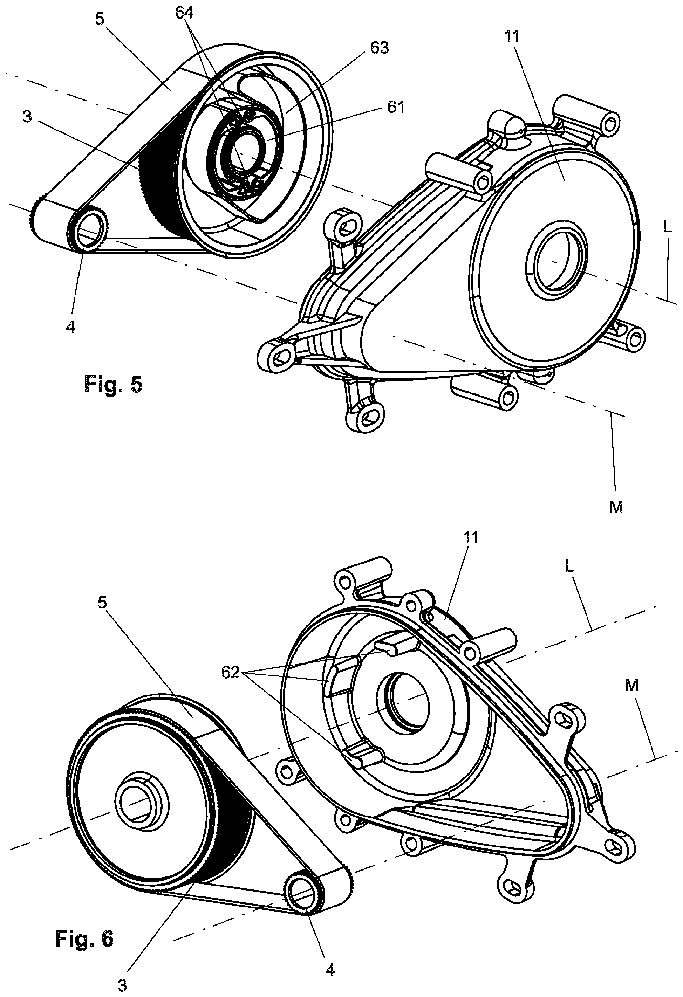

Die nachfolgenden Figuren 2 bis 6 zeigen eine erste Ausführungsform des Getriebes 1 in unterschiedlichen Ansichten, wobei die Explosionsdarstellungen in den Figuren 2, 3 und 4 axial in Richtung der Längsachse L auseinandergezogen sind, und Figuren 5 und 6 eine axiale Ansicht ins Innere des Gehäuses 11 zeigen.

Das Getriebe 1 umfasst einen Riementrieb, nämlich einen Zahnriementrieb, mit einem ersten Riemenrad 3, welches ein erstes Getrieberad bildet, einem zweiten Riemenrad 4, welches ein zweites Getrieberad bildet, und einem als Zugmittel um diese Riemenräder 3 und 4 umlaufenden Zahnriemen 5.

Das Riemenrad 3 ist drehfest auf der Lenkwelle 2 fixiert, und in Figuren 2, 3 und 4 axial davon auseinandergezogen dargestellt. Das Riemenrad 4 ist mit einer nicht dargestellten Motorwelle oder Antriebswelle einer Drehmomenterzeugungseinrichtung verbunden.

In der Ausführung gemäß der Figuren 2 bis 4 ist erfindungsgemäß ein Umdrehungsbegrenzer 6 vorgesehen, der einen koaxialen, drehfest mit dem Riemenrad 3 verbundenen Wickelkern 61, an dem Gehäuse 11 feststehend ausgebildete Halteelemente 62, und ein flexibles Band 63 umfasst. Das Band 63 ist als geschlossene Bandschlaufe ausgebildet, welche in ihrem Verlauf durch Radialschlitze 64 radial durch den Wickelkern 61 hindurchgeführt ist. Dadurch ist das Band 63 in Umfangsrichtung aufwickelbar an dem Wickelkern 61 fixiert. Von dem Wickelkern 61 erstecken sich Wickeltrume 65 bis zu einem Abschnitt des Bandes 63, der um die Halteelemente 62 geschlungen ist. Dadurch ist das Band 63 mit einem von dem Wickelkern 61 beabstandeten, über die Wickeltrume 65 verbundenen Bandabschnitt an dem Gehäuse 11 fixiert.

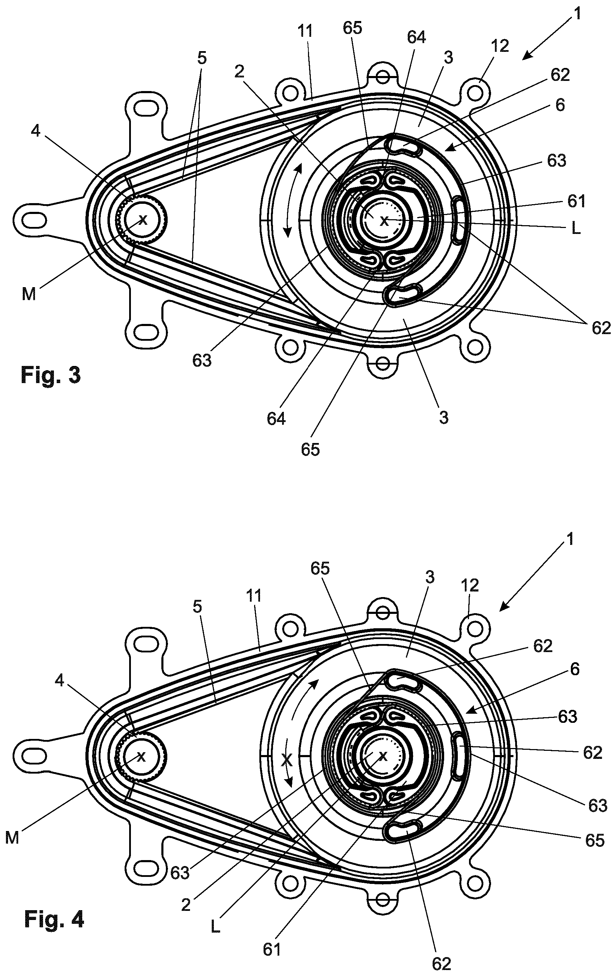

Figur 3 zeigt einen Betriebszustand innerhalb der zur Lenkung zulässigen Drehung der Lenkwelle 2. Diese ist darin zusammen mit dem Riemenrad 3 und der daran angebrachten Wickelkern 61 frei in beiden Drehrichtungen drehbar, wie mit dem Doppelpfeil angedeutet ist. Die Wickeltrume 65 sind zugspannungsfrei.

Durch eine Drehung der Lenkwelle 2 entgegen dem Uhrzeigersinn wird der in Figur 4 gezeigte Begrenzungs- oder Anschlagzustand des Umdrehungsbegrenzers 6 erreicht. Dieser zeichnet sich dadurch aus, dass das Band 63 so weit auf dem Wickelkern 61 aufgewickelt ist, dass die Wickeltrume 65 zwischen dem Umfang des Wickelkerns 61 und den relativ dazu feststehenden Haltelementen 62 des Gehäuses 11 straff gespannt auf Zug belastet sind. Dadurch stehen sie einem in die Lenkwelle 2 entgegen dem Uhrzeigersinn eingeleiteten Drehmoment entgegen, und blockieren eine weitere Drehung in dieser Drehrichtung, was mit dem durchgestrichenen Pfeil angedeutet ist. Der Umdrehungsbegrenzer 6 befindet sich in einem Endanschlag.

Durch Drehung in umgekehrter Richtung, also in der Ansicht der Figuren 3 und 4 im Uhrzeigersinn, kann das Band 63 im umgekehrten Wickelsinn auf dem Wickelkern 61 aufgewickelt werden, bis die Wickeltrume 65 in entgegengesetzter Richtung zwischen dem Wickelkern 61 und den Haltelementen 62 zugfest gespannt sind. Dadurch kann auf dieselbe Weise eine Umdrehungsbegrenzung in der umgekehrten Drehrichtung erfolgen.

Wie in Figur 5 erkennbar ist, kann das Riemenrad 3 topf- oder trommelförmig hohl ausgebildet sein, wobei der Wickelkern 61 koaxial in dem Innenraum fixiert ist, um den der Zahnriemen 5 außen über den Umfang umläuft. Die zapfenförmigen Halteelemente 62 des Gehäuses 11 ragen im montierten Zustand derart axial in diesen Innenraum des Riemenrads 3, dass sie auf der axialen Position des Wickelkerns 61 positioniert sind und in das in Figur 5 erkennbare schlaufenförmige Band 63 eingreifen. Dadurch wird eine kompakte Integration des Umdrehungsbegrenzers 6 in das Riemenrad 3 ermöglicht.

Die Halteelemente 62 können einstückig an dem Gehäuse 11 angeformt sein, beispielsweise in einem Gussverfahren. Der Wickelkern 62 kann über geeignete Verbindungsmittel fest mit dem Riemenrad 3 verbunden sein, und es ist ebenfalls eine einstückige Ausführung möglich.

Für das Band 63 kann ein hoch flexibles, auf Zug belastbares Material eingesetzt werden, beispielsweise ein Federstahl-Band.

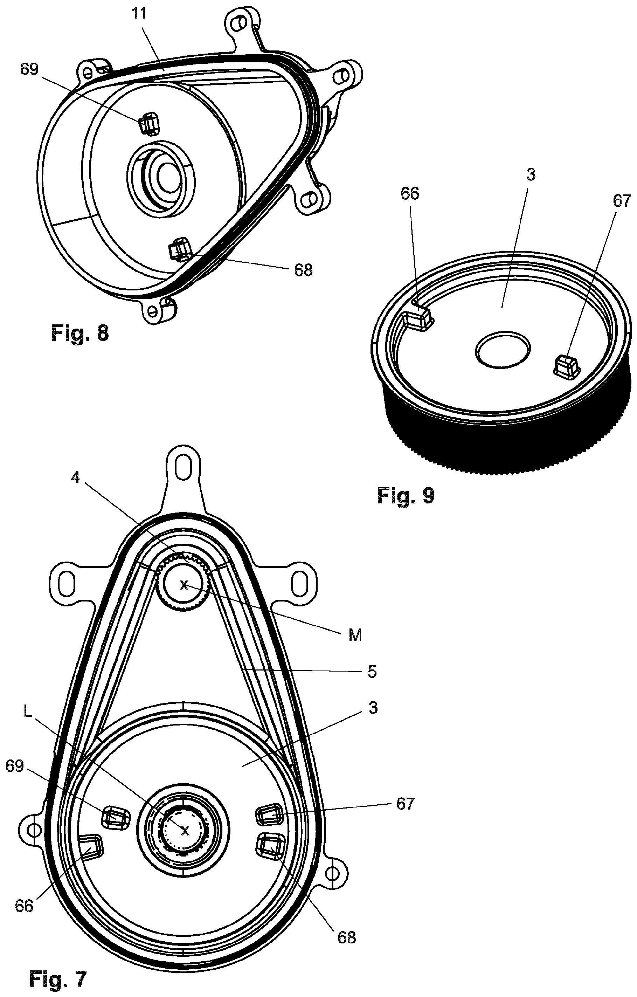

In den Figuren 7 bis 9 ist eine zweite Ausführung eines erfindungsgemäßen Umdrehungsbegrenzers 6 gezeigt. Dieser weist an dem Riemenrad 3 angebrachte, axial vorstehende Anschlagnocken 66 und 67 auf, und damit korrespondierende, von dem Gehäuse 11 entgegengesetzt axial vorstehende Gegenanschlagnocken 68 und 69.

Bei einer relativen Drehung werden die Anschlagnocken 66 und 67 in Umfangsrichtung relativ zu den Gegenanschlagnocken 68 und 69 bewegt, bis sie in Umfangsrichtung mechanisch dagegen anschlagen. Dadurch wird der Drehwinkel einer Drehung des Riemenrads 3 relativ zum Gehäuse begrenzt.

### Bezugszeichenliste

- 1: Getriebe
- 11: Gehäuse
- 12: Befestigungsmittel
- 2: Lenkwelle
- 3: Riemenrad
- 4: Riemenrad
- 5: Zahnriemen
- 6: Umdrehungsbegrenzer
- 61: Wickelkern
- 62: Halteelement
- 63: Band
- 64: Radialschlitz
- 65: Wickeltrum
- 66, 67: Anschlagnocken
- 68, 69: Gegenanschlagnocken

- L: Längsachse
- M: Motorachse

## Patentansprüche

1. Steer-by-wire-Lenksäule für ein Kraftfahrzeug, die eine relativ zu einem Gehäuse (11) um eine Längsachse (L) drehbar gelagerte Lenkwelle (2) aufweist, die mit einem Getriebe (1) wirkungsmäßig verbunden ist, wobei das Getriebe (1) mindestens zwei im Getriebeeingriff zusammenwirkende Getriebemittel (3, 4) aufweist, wobei ein Umdrehungsbegrenzer (6) zur Begrenzung der Rotation der Lenkwelle (2) relativ zum Gehäuse (11) mit dem Getriebe (1) integriert ausgebildet ist, wobei das Getriebe (11) mit einer Drehmomenterzeugungseinrichtung eines Feedback-Aktuators wirkungsmäßig verbunden ist,
**dadurch gekennzeichnet,**
**dass** der Umdrehungsbegrenzer (6) einen Wickelkern (61) aufweist, auf dem ein flexibles Bandelement (63) aufwickelbar ist, wobei der Wickelkern (61) relativ zum Gehäuse (11) oder einem Getriebemittel (3) drehbar ist, und das Bandelement (63) zwischen dem Wickelkern (61) und dem Gehäuse (11) oder Getriebemittel (3) fixiert ist.

2. Lenksäule nach Anspruch 1, **dadurch gekennzeichnet, dass** der Umdrehungsbegrenzer (6) wirkungsmäßig mit einem Getriebemittel (3) verbunden ist.

3. Lenksäule nach einem der vorangehenden Ansprüche, **dadurch gekennzeichnet, dass** das Getriebe (11) mindestens zwei miteinander in Eingriff stehende Getrieberäder (3, 4) aufweist.

4. Lenksäule nach einem der vorangehenden Ansprüche, **dadurch gekennzeichnet, dass** ein Getriebemittel (3) drehfest mit der Lenkwelle (2) verbunden ist.

5. Lenksäule nach Anspruch 1, **dadurch gekennzeichnet, dass** die Drehmomenterzeugungseinrichtung einen motorischen Antrieb aufweist.

6. Lenksäule nach einem der vorangehenden Ansprüche, **dadurch gekennzeichnet, dass** der Umdrehungsbegrenzer (6) mit einem Getriebemittel (3) integriert ausgebildet ist.

7. Lenksäule nach Anspruch 6, **dadurch gekennzeichnet, dass** der Umdrehungsbegrenzer (6) mit einem Getrieberad (3) baulich integriert ausgebildet ist.

8. Lenksäule nach einem der vorangehenden Ansprüche 6 oder 7, **dadurch gekennzeichnet, dass** ein Getriebemittel (3) ein Anschlagelement (66, 67) aufweist, und das Gehäuse (11) ein mit dem Anschlagelement (66, 67) zusammenwirkendes Gegenanschlagelement (68, 69) aufweist.

9. Lenksäule nach einem der vorangehenden Ansprüche, **dadurch gekennzeichnet, dass** der Wickelkern (61) koaxial zu einem Getrieberad (3) angeordnet ist.

10. Lenksäule nach einem der vorangehenden Ansprüche, **dadurch gekennzeichnet, dass** der Wickelkern (61) drehfest mit einem Getrieberad (3) verbunden ist.

## Claims

1. Steer-by-wire steering column for a motor vehicle, which has a steering shaft (2) which is mounted rotatably relative to a housing (11) about a longitudinal axis (L) and is operatively connected to a transmission (1), the transmission (1) having at least two transmission means (3, 4), wherein a rotation limiter (6) for limiting the rotation of the steering shaft (2) relative to the housing (11) is integrally formed with the transmission (1), wherein the transmission (11) is operatively connected to a torque generating device of a feedback actuator,
**characterized in**
**in that** the rotation limiter (6) has a winding core (61) on which a flexible band element (63) can be wound, the winding core (61) being rotatable relative to the housing (11) or a transmission means (3), and the band element (63) being fixed between the winding core (61) and the housing (11) or transmission means (3).

2. Steering column according to claim 1, **characterized in that** the rotation limiter (6) is operatively connected to a transmission means (3).

3. Steering column according to one of the preceding claims, **characterized in that** the transmission (11) has at least two intermeshing transmission gears (3, 4).

4. Steering column according to one of the preceding claims, **characterized in that** a transmission means (3) is non-rotatably connected to the steering shaft (2).

5. Steering column according to claim 1, **characterized in that** the torque generating device has a motor drive.

6. Steering column according to one of the preceding claims, **characterized in that** the rotation limiter (6) is designed to be integrated with a transmission means (3).

7. Steering column according to claim 6, **characterized in that** the rotation limiter (6) is structurally integrated with a gear wheel (3).

8. Steering column according to one of the preceding claims 6 or 7, **characterized in that** a transmission means (3) has a stop element (66, 67), and the housing (11) has a counter-stop element (68, 69) interacting with the stop element (66, 67).

9. Steering column according to one of the preceding claims, **characterized in that** the winding core (61) is arranged coaxially to a transmission gear (3).

10. Steering column according to one of the preceding claims, **characterized in that** the winding core (61) is non-rotatably connected to a transmission gear (3).

## Revendications

1. Colonne de direction " steer-by-wire " pour un véhicule automobile, qui présente un arbre de direction (2) logé de manière rotative par rapport à un boîtier (11) autour d'un axe longitudinal (L), qui est relié de manière active à une transmission (1), la transmission (1) présentant au moins deux moyens de transmission (3, 4), un limiteur de rotation (6) destiné à limiter la rotation de l'arbre de direction (2) par rapport au boîtier (11) étant réalisé de manière intégrée avec la transmission (1), la transmission (11) étant reliée fonctionnellement à un dispositif de génération de couple d'un actionneur à rétroaction,
**caractérisé en ce que**
**en ce que** le limiteur de rotation (6) présente un noyau d'enroulement (61) sur lequel peut être enroulé un élément de bande flexible (63), le noyau d'enroulement (61) pouvant tourner par rapport au carter (11) ou à un moyen de transmission (3), et l'élément de bande (63) étant fixé entre le noyau d'enroulement (61) et le carter (11) ou le moyen de transmission (3).

2. Colonne de direction selon la revendication 1, **caractérisée en ce que** le limiteur de rotation (6) est relié fonctionnellement à un moyen de transmission (3).

3. Colonne de direction selon l'une quelconque des revendications précédentes, **caractérisée en ce que** le mécanisme (11) comporte au moins deux roues de transmission (3, 4) en prise l'une avec l'autre.

4. Colonne de direction selon l'une quelconque des revendications précédentes, **caractérisée en ce qu'**un moyen de transmission (3) est solidaire en rotation de l'arbre de direction (2).

5. Colonne de direction selon la revendication 1, **caractérisée en ce que** le moyen de génération de couple comporte un entraînement motorisé.

6. Colonne de direction selon l'une quelconque des revendications précédentes, **caractérisée en ce que** le limiteur de rotation (6) est réalisé de manière intégrée avec un moyen de transmission (3).

7. Colonne de direction selon la revendication 6, **caractérisée en ce que** le limiteur de rotation (6) est structurellement intégré avec une roue de transmission (3).

8. Colonne de direction selon l'une des revendications 6 ou 7 précédentes, **caractérisée en ce qu'**un moyen de transmission (3) comporte un élément de butée (66, 67), et le boîtier (11) comporte un élément de contre-butée (68, 69) coopérant avec l'élément de butée (66, 67).

9. Colonne de direction selon l'une des revendications précédentes, **caractérisée en ce que** le noyau d'enroulement (61) est disposé coaxialement à une roue de transmission (3).

10. Colonne de direction selon l'une des revendications précédentes, **caractérisée en ce que** le noyau d'enroulement (61) est solidaire en rotation d'une roue de transmission (3).
